# EUROPEAN PATENT APPLICATION

(11) **EP 2 571 087 A1**
(43) Date of publication of application: **20.03.2013**
(21) Application number: 11780504.4
(22) Date of filing: 26.04.2011
(51) Int. Cl.: H01M 8/06, H01M 8/02, H01M 8/04, H01M 8/10

(54) **FUEL CELL DEVICE**

(30) Priority: 11.05.2010 JP 2010109093
(71) Applicant: Konica Minolta Holdings, Inc., Tokyo 100-7015 (JP)
(72) Inventor: URATANI Shoichi, Hino-Shi Tokyo 191-8511 (JP); WADA Shigeru, Hino-Shi Tokyo 191-8511 (JP); UEYAMA Masayuki, Hino-Shi Tokyo 191-8511 (JP); ISHIDA Nobuhisa, Hino-Shi Tokyo 191-8511 (JP)
(74) Representative: HOFFMANN EITLE
(86) International application number: PCT/JP2011/060112
(87) International publication number: WO 2011/142247

(57) **Abstract**

Disclosed is a fuel cell device that has a hydrogen-generating member, can promote the generation of hydrogen by the hydrogen-generating member, and has favorable electricity-generating efficiency. The fuel cell device is provided with: an electricity-generating unit having a fuel electrode (102), an air electrode (103), and an electrolyte film (101) sandwiched between the fuel electrode (102) and the air electrode (103); a hydrogen-generating member (104) that, by means of an oxidation reaction with water, generates hydrogen for supplying to the fuel electrode (102) of the aforementioned electricity-generating unit; a heater (105) that heats the hydrogen-generating member (104); a temperature sensor (106) that detects the temperature of the hydrogen-generating member (104); and a temperature control unit (20) that controls the temperature of the hydrogen-generating member (104) in response to the detection results of the temperature sensor (106). The temperature control unit (20) stops the passage of electricity through the heater (105) when it has been determined that the temperature of the hydrogen-generating member (104) is at least a predetermined temperature.

## Description

### Technical Field

The present invention relates to a fuel cell device, and particularly to a fuel cell device having a hydrogen generating member.

### Background Art

In recent years, along with improvements in functionality and performance of portable electronic equipment such as a cellular phone, a portable information terminal, a notebook-sized personal computer, a portable audio device, a portable visual device, and so on, there has been a growing demand that battery cells for driving them have an increased capacity. As battery cells for driving such portable electronic equipment, conventionally used are a lithium battery and a nickel-cadmium battery. These types of batteries, however, have almost reached their capacity limits to such an extent that a significant increase in their capacities can no longer be expected. With this as a background, in place of a lithium battery and a nickel-cadmium battery, a fuel cell that has a high energy density and can achieve a capacity increase has now been under active development.

A fuel cell is configured to extract electric power in the process of generating water from hydrogen and oxygen and, in principle, allows electric power energy to be extracted with high efficiency, thus achieving energy saving. In addition, a fuel cell discharges only water when generating electric power and thus is highly evaluated as an environmentally-friendly electric power generation system. For these reasons, a fuel cell is expected to play a key role in solving global concerns about energy and the environment.

In such a fuel cell, typically, a solid polymer electrolyte membrane using a solid polymer ion exchange membrane, a solid oxide electrolyte membrane using an yttria-stabilized zirconia (YSZ), or the like is sandwiched from both sides between a fuel electrode (anode) and an oxidant electrode (cathode) to form one cell. In a cell having this configuration, a fuel gas flow passage for supplying a fuel gas (for example, a hydrogen gas) to the fuel electrode and an oxidant gas flow passage for supplying an oxidant gas (for example, oxygen or air) to the oxidant electrode are provided, and a fuel gas and an oxidant gas are supplied to the fuel electrode and the oxidant electrode via these flow passages, respectively, whereby electric power generation is performed.

A fuel cell device to which a fuel is externally supplied, however, is required to be developed in terms of an infrastructure for supplying a fuel (for example, hydrogen) thereto. Furthermore, even in a case where methanol, which is relatively easily available, is used as a fuel, there is a problem that it would take years to establish distribution channels for methanol.

In order to solve these problems, Patent Document 1 proposes a fuel cell system in which a hydrogen generating member that generates hydrogen by reacting with water is provided in a fuel cell main body, and hydrogen thus generated at the hydrogen generating member is supplied to a fuel electrode. In this fuel cell system, in order to obtain water required for hydrogen generation, water generated by electric power generation in the fuel cell main body is used, and thus there is no need to carry water. Hydrogen generated at the hydrogen generating member is supplied to the fuel electrode, and electric power generation is thereby performed to generate water on an oxidant electrode side. These cyclical processes are followed, and thus an electric power generation operation can be continuously performed without the need to externally supply hydrogen.

### List of Citations

### Patent Literature

Patent Document 1: JP-A-2009-99491
Patent Document 2: JP-A-2010-27217

### Summary of the Invention

### Technical Problem

The fuel cell system proposed in Patent Document 1, however, does not have a section that heats the hydrogen generating member, posing a problem that, if the hydrogen generating member is at a low temperature, hydrogen is hardly generated.

Patent Document 2 proposes a fuel cell system that controls a supply pressure of hydrogen as a fuel in accordance with the temperature of a fuel cell. The fuel cell system proposed in Patent Document 2, however, provides no disclosure or suggestion as to controlling the temperature of a hydrogen generating member.

In view of the above-described circumstances, it is an object of the present invention to provide a fuel cell device having a hydrogen generating member, which can enhance hydrogen generation at the hydrogen generating member and achieves energy saving and excellent electric power generation efficiency.

### Solution to the Problem

In order to achieve the above-described object, a fuel cell device according to the present invention includes: an electric power generation portion that has a fuel electrode, an oxidant electrode, and an electrolyte held between the fuel electrode and the oxidant electrode; a hydrogen generating member that, by an oxidation reaction with water, generates hydrogen to be supplied to the fuel electrode of the electric power generation portion; a heating section that heats the hydrogen generating member; a temperature detection section that detects the temperature of the hydrogen generating member; and a temperature control section that controls the temperature of the hydrogen generating member in accordance with a result of the detection by the temperature detection section. In the fuel cell device, if the temperature control section judges that the temperature of the hydrogen generating member is not less than a predetermined temperature, the heating section is halted from operating.

### Advantageous Effects of the Invention

According to the present invention, the hydrogen generating member can be heated, and thus hydrogen generation at the hydrogen generating member can be enhanced. Furthermore, according to the present invention, when the temperature of the hydrogen generating member is not less than a predetermined temperature, an operation by the heating section that heats the hydrogen generating member is halted, and thus energy consumption at the heating section can be suppressed. This provides improved electric power generation efficiency.

### Brief Description of Drawings

[Fig. 1] A schematic diagram showing a schematic configuration of a fuel cell device according to one embodiment of the present invention.
[Fig. 2] A schematic diagram showing a flow of an electric power generation operation and a regeneration operation performed in the fuel cell device according to the one embodiment of the present invention.
[Fig. 3] A flow chart showing one example of a control operation of a temperature control unit.
[Fig. 4] A diagram showing timing for halting heater energization.

### Description of Embodiments

The following describes an embodiment of present invention with reference to the appended drawings. The present invention, however, is not limited to the embodiment described below.

### <<Schematic Configuration of Fuel Cell Device according to One Embodiment of Present Invention>>

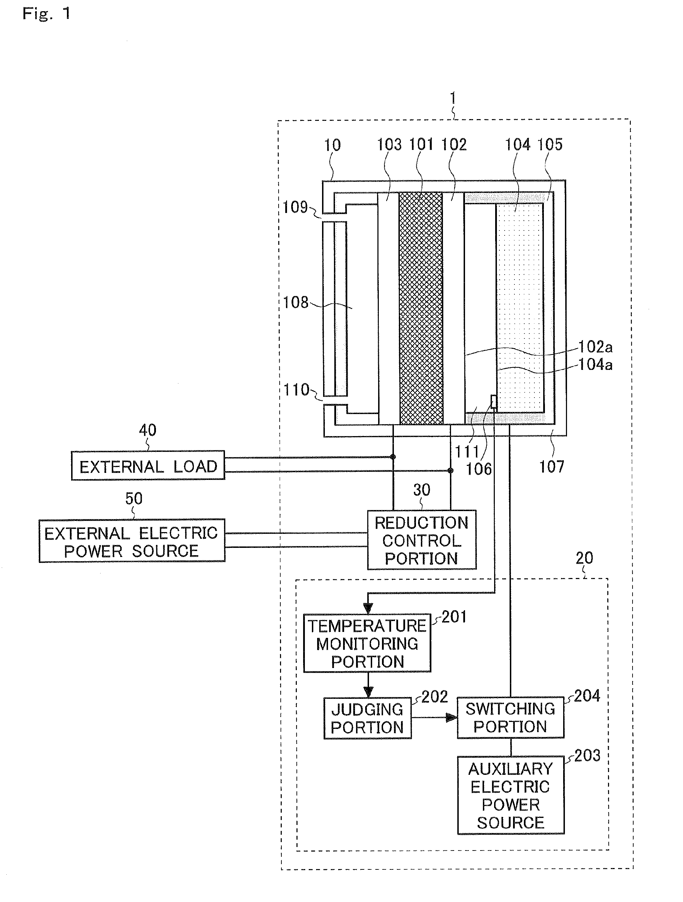

First, with reference to Fig. 1, a description is made of a schematic configuration of a fuel cell device according to one embodiment of the present invention. Fig. 1 is a schematic diagram showing the schematic configuration of the fuel cell device according to the one embodiment of the present invention.

A fuel cell device 1 according to the one embodiment of the present invention includes, as shown in Fig. 1, a fuel cell main body 10 and a temperature control unit 20. In Fig. 1, the fuel cell main body 10 is shown in the form of a sectional schematic diagram, and the temperature control unit 20 is shown in the form of a block diagram.

The fuel cell main body 10 has an electrolyte membrane 101, a fuel electrode 102, an air electrode 103 as an oxidant electrode, a hydrogen generating member 104, a heater 105, a temperature sensor 106, and a cover member 107. Furthermore, the fuel cell main body 10 has an MEA (membrane electrode assembly; membrane electrode bonded body) structure in which the fuel electrode102 and the air electrode 103 are bonded to both sides of the electrolyte membrane 101, respectively.

On a fuel electrode 102 side, the hydrogen generating member 104 that supplies hydrogen as a fuel gas to the fuel electrode 102 is provided, and on an air electrode 103 side, an air flow passage 108 for supplying air as an oxidant gas to the air electrode 103 is formed. While this embodiment uses air as an oxidant gas, it is also possible to use, as an oxidant gas, a gas containing oxygen other than air.

As a material of the electrolyte membrane 101, a solid oxide electrolyte using, for example, stabilized yttria zirconium (YSZ) can be used, and a solid polymer electrolyte such as, for example, Nafion (a registered trademark of E.I. du Pont de Nemours & Co., Inc.), a cationic conductive polymer, or an anionic conductive polymer can also be used. There is, however, no limitation thereto, and any material can be used as long as it satisfies characteristics of an electrolyte of a fuel cell such as to allow passage of hydrogen ions therethrough, to allow passage of oxygen ions therethrough, or to allow passage of hydroxide ions therethrough. In this embodiment, as the electrolyte membrane 101, there is used an electrolyte that allows passage of oxygen ions or hydroxide ions therethrough, for example, a solid oxide electrolyte using stabilized yttria zirconium (YSZ), so that water is generated on the fuel electrode 102 side at the time of electric power generation. In this case, by a chemical reaction using water thus generated on the fuel electrode 102 side at the time of electric power generation, hydrogen can be generated from the hydrogen generating member 104.

The electrolyte membrane 101, when made of a solid oxide electrolyte, can be formed by an electrochemical vapor deposition method (CVD-EVD method; chemical vapor deposition-electrochemical vapor deposition) or the like and, when made of a solid polymer electrolyte, can be formed by a coating method or the like.

Each of the fuel electrode 102 and the air electrode 103 can be made up of, for example, a catalyst layer that comes in contact with the electrolyte membrane 101 and a diffusion electrode that is stacked on the catalyst layer. As the catalyst layer, for example, carbon black supporting platinum black or a platinum alloy can be used. Furthermore, as a material of the diffusion electrode of the fuel electrode 102, for example, carbon paper, a Ni-Fe based cermet, or a Ni-YSZ based cermet can be used. Furthermore, as a material of the diffusion electrode of the air electrode 103, for example, carbon paper, a La-Mn-O based compound, or a La-Co-Ce based compound can be used.

Each of the fuel electrode 102 and the air electrode 103 can be formed by, for example, a vapor deposition method.

As the hydrogen generating member 104, a material that generates hydrogen by oxidation (for example, Fe or a Mg alloy) can be used, and this embodiment uses Fe that generates hydrogen by oxidation. Furthermore, the hydrogen generating member 104 may be such that it not only generates hydrogen but also can store (absorb) hydrogen. In a case where the hydrogen generating member 104 can store (absorb) hydrogen, after the hydrogen generating member 104 generates hydrogen from itself, a storage (absorption) operation is performed, and thus the hydrogen generating member 104 can be used repeatedly. As a material that can store hydrogen as a fuel, a hydrogen storing alloy using Ni, Fe, Pd, V, Mg, or the like as a base material can be used.

An emission surface 104a of the hydrogen generating member 104, from which hydrogen is emitted, and a supply surface 102a of the fuel electrode 102, to which hydrogen is supplied, are opposed to each other and disposed parallel to and at a given distance from each other via a spacer such as beads. The emission surface 104a of the hydrogen generating member 104 is configured such that hydrogen is emitted in a planar form therefrom and is uniformly supplied to the supply surface 102a of the fuel electrode 102.

Specifically, by the heater 105 disposed in contact with all the surfaces (exclusive of the emission surface 104a) of the hydrogen generating member 104, the hydrogen generating member 104 as a whole is evenly heated to an increased temperature, so that hydrogen can be emitted in a planar form from the emission surface 104a. Thus, the hydrogen generating member 104 can emit hydrogen from substantially the entire area of the emission surface 104a thereof toward substantially the entire area of the supply surface 102a of the fuel electrode 102.

Furthermore, desirably, a hydrogen generation rate of the hydrogen generating member 104 is set to be substantially constant regardless of locations on the emission surface 104a. Specifically, a thermochemical equilibrium is utilized. By raising and lowering the temperature of the hydrogen generating member 104, hydrogen can be generated in such a manner as to correspond to a deviation from an equilibrium state. Based on this, using the heater 105, the temperature of the hydrogen generating member 104 as a whole is made uniform, and thus hydrogen can be generated at a constant rate regardless of locations.

Furthermore, in a case where a chemical equilibrium is utilized, a hydrogen concentration at cell start-up in a space portion 111 between the fuel electrode 102 and the hydrogen generating member 104 is preset to be constant regardless of locations, and thus the hydrogen generation rate of the hydrogen generating member 104 can be set to be constant. This is attributable to a phenomenon below.

When the hydrogen concentration at cell start-up is constant regardless of locations, constant electric power is generated from the electrode. That is, a hydrogen consumption also becomes constant regardless of locations. In this case, there occurs a deviation in chemical equilibrium due to hydrogen consumed, and from the hydrogen generating member 104, hydrogen is newly generated in such a manner as to correspond to an amount of the deviation. Since the hydrogen consumption is constant regardless of locations, the rate at which hydrogen is generated from the hydrogen generating member 104 also becomes constant regardless of locations.

As a method for setting the hydrogen concentration at cell start-up to be constant regardless of locations, hydrogen could be encapsulated in advance in the space portion 111 between the fuel electrode 102 and the hydrogen generating member 104. Hydrogen thus encapsulated diffuses spontaneously, and thus a concentration thereof in the space portion 111 in which it is encapsulated becomes constant, so that the hydrogen concentration can be set to be constant regardless of locations.

By setting the hydrogen generation rate of the hydrogen generating member 104 to be substantially constant regardless of locations on the emission surface 104a as described above, it is possible to suppress an output drop due to variations in electromotive force, and thus increased fuel efficiency can be provided.

While in this embodiment, the emission surface 104a of the hydrogen generating member 104, from which hydrogen is emitted, and the supply surface 102a of the fuel electrode 102, to which hydrogen is supplied, are disposed parallel to and at a given distance from each other, a configuration may also be adopted in which the emission surface 104a of the hydrogen generating member 104, from which hydrogen is emitted, and the supply surface 102a of the fuel electrode 102, to which hydrogen is supplied, are superposed on and in tight contact with each other. This configuration can achieve a simplified structure and a size reduction of the fuel cell device.

Furthermore, while this embodiment uses a configuration in which the hydrogen generating member 104 is incorporated in the fuel cell main body 10 (cover member 107), a configuration may also be adopted in which the hydrogen generating member 104 is provided outside the fuel cell main body 10 and is connected to the fuel cell main body 10 by way of a flow passage.

The cover member 107 is a container for covering constituent components of the fuel cell main body 10 other than the cover member 107, and on the air electrode 103 side thereof, an air supply port 109 for supplying air to the air flow passage 108 and an air discharge port 110 for discharging excess air are provided. Furthermore, similarly, also on the air electrode 103 side of the heater 105, the air supply port 109 and the air discharge port 110 are provided. Air passed through the air supply port 109 to the air flow passage 108 is dispersedly supplied to the entire body of the air electrode 103. Each of the air supply port 109 and the air discharge port 110 is provided with an unshown opening/closing valve by which each of the air supply port 109 and the air discharge port 110 can be brought to a shut-off state.

The temperature sensor 106 is constituted by, for example, a thermocouple and is disposed closely to the hydrogen generating member 104 in order to detect the temperature of the hydrogen generating member 104.

The fuel cell main body 10 is configured to generate electric power by an electrochemical reaction caused by supplying hydrogen from the hydrogen generating member 104 to the fuel electrode 102 and by supplying air from the air flow passage 108 to the air electrode 103. Furthermore, in this electric power generation operation, iron (Fe) forming the hydrogen generating member 104 is oxidized to turn into an iron oxide (Fe₃O₄), so that the proportion of iron (Fe) in the hydrogen generating member 104 is gradually decreased. An electric power generation operation will be described later in more detail.

Furthermore, the temperature control unit 20 will also be detailed later.

A reduction control portion 30 is configured to reduce and regenerate the hydrogen generating member 104 when in a state where oxidation thereof has progressed along with the proceeding of an electric power generation operation of the fuel cell main body 10. Specifically, using hydrogen (H₂) generated by electrolysis of water (H₂O) performed in the fuel cell main body 10, which is generated in an electric power generation operation of the fuel cell main body 10, the reduction control portion 30 makes the hydrogen (H₂) react with the hydrogen generating member 104 in an oxidized state (the hydrogen generating member 104 in a state where the proportion of an iron oxide (Fe₃O₄) therein has been increased) so as to reduce the hydrogen generating member 104 in an oxidized state.

### <<Electric Power Generation Operation and Regeneration Operation>>

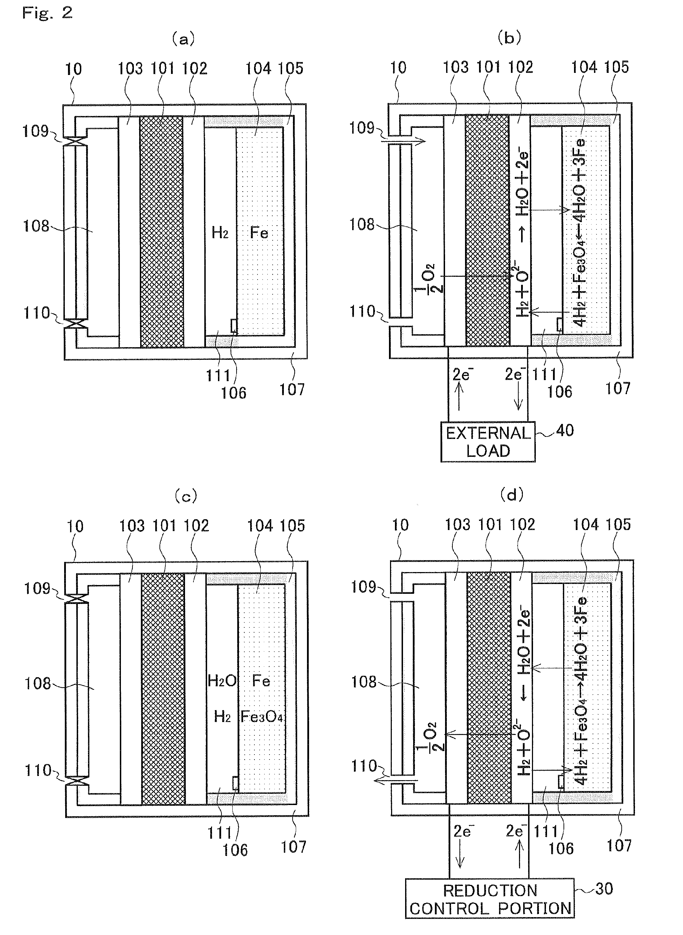

Next, with reference to Fig. 2, a description is made in detail of an electric power generation operation and a regeneration (reduction) operation performed in the fuel cell device 1 according to the one embodiment of the present invention. In Fig. 2, parts identical to those in Fig. 1 are indicated by identical reference signs. Figs. 2(a) to 2(d) are schematic views showing a flow of an electric power generation operation and a regeneration operation performed in the fuel cell device 1 according to the one embodiment of the present invention.

### <Electric Power Generation Operation>

In an initial state before an electric power generation operation, as shown in Fig. 2(a), the air supply port 109 and the air discharge port 110 are both closed, and hydrogen (H₂) is encapsulated in the space potion 111 of the fuel cell main body 10.

After that, as shown in Fig. 2(b), the air supply port 109 and the air discharge port 110 are opened, so that air is supplied to the air electrode 103 via the air flow passage 108. Then, at the fuel electrode 102, there occurs a reaction between the hydrogen (H₂) encapsulated in the space portion 111 and oxygen ions (O²⁻) resulting from ionization at the air electrode 103 and having passed through the electrolyte membrane 101, which is expressed by a chemical reaction formula (1) below, so that electrons (e⁻) are generated and accumulated. That is, in the fuel cell main body 10, an electromotive force is generated to start an electric power generation operation. In the electric power generation operation, when an external load 40 is connected between the fuel electrode 102 and the air electrode 103, the electrons (e⁻) accumulated at the fuel electrode 102 flow to the air electrode 103 via the external load 40. This enables driving of the external load 40.

H₂ +O²⁻ - H₂O +2e⁻ (1)

Furthermore, in the electric power generation operation, as shown by the above chemical reaction formula (1), water (H₂O) is generated at the fuel electrode 102. The water (H₂O) generated is supplied to the hydrogen generating member 104 (Fe) via the space portion 111, and in the hydrogen generating member 104 (Fe), there occurs an oxidation reaction with the water (H₂O) supplied, which is expressed by a chemical reaction formula (2) below, resulting in the generation of hydrogen (H₂). The hydrogen (H₂) generated is supplied to the fuel electrode 102 via the space portion 111, and at the fuel electrode 102, the hydrogen (H₂) supplied is oxidized to cause electric power generation, so that water (H₂O) is again generated. These cyclical processes are followed, and thus an electric power generation operation is continuously performed.

4H₂O + 3Fe → 4H₂ + Fe₃O₄ (2)

In the above-described electric power generation operation, in the hydrogen generating member 104, iron (Fe) is oxidized to turn into an iron oxide (Fe₃O₄), so that the proportion of iron (Fe) in the hydrogen generating member 104 is gradually decreased.

Furthermore, from the state of the electric power generation operation shown in Fig. 2(b), as shown in Fig. 2(c), the air supply port 109 and the air discharge port 110 are closed, so that the supply of air to the air electrode 103 is halted, and thus the electric power generation operation can be halted. At this time, water (H₂O) and hydrogen (H₂) generated by the reactions expressed by the above chemical reaction formulae (1) and (2), respectively, remain in the space portion 111.

### <Regeneration Operation>

From the state where the electric power generation operation is halted shown in Fig. 2(c), as shown in Fig. 2(d), the reduction control portion 30 performs energization by applying a voltage between the fuel electrode 102 and the air electrode 103 in the fuel cell main body 10. Then, at the fuel electrode 102, there occurs electrolysis with the water (H₂O) remaining in the space portion 111 and electrons (e⁻) supplied by the energization, which is expressed by a chemical reaction formula (3) below, resulting in the generation of hydrogen (H₂).

H₂O + 2e⁻ → H₂ + O²⁻ (3)

The hydrogen (H₂) generated at the fuel electrode 102 is supplied to the hydrogen generating member 104 via the space portion 111, and in the hydrogen generating member 104, there occurs a reduction reaction with the hydrogen (H₂) supplied, which is expressed by a chemical reaction formula (4) below. By the reduction reaction, an iron oxide (Fe₃O₄) in the hydrogen generating member 104 is reduced to turn into iron (Fe), so that the proportion of iron (Fe) in the hydrogen generating member 104 is gradually increased, and thus the hydrogen generating member 104 is regenerated.

4H₂ + Fe₃O₄ → 4H₂O + 3Fe (4)

Furthermore, in the regeneration operation, as shown by the above chemical reaction formula (4), water (H₂O) is generated in the hydrogen generating member 104. The water (H₂O) generated is supplied to the fuel electrode 102 via the space portion 111, and at the fuel electrode 102, electrolysis of the water (H₂O) supplied is performed, so that hydrogen (H₂) is again generated. These cyclical processes are followed, and thus a regeneration operation is continuously performed.

### <<Control Operation of Temperature Control Unit>>

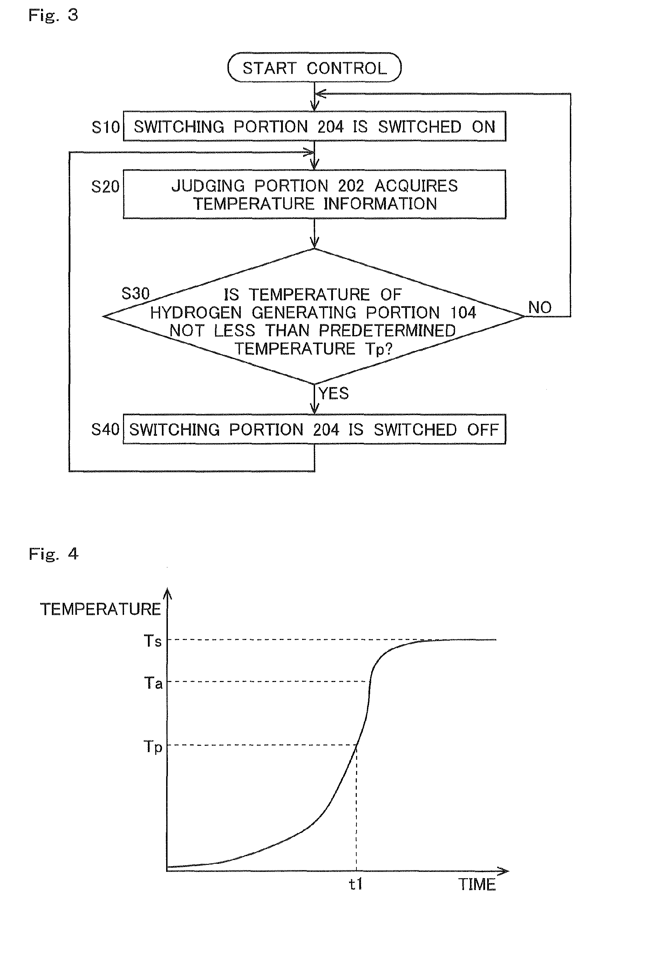

Next, with reference to Figs. 1, 3, and 4, a description is made in detail of a control operation of the temperature control unit 20, which is carried out when the above-described electric power generation operation is performed. Fig. 3 is a flow chart showing one example of the control operation of the temperature control unit 20, and Fig. 4 is a diagram showing timing for halting heater energization.

The temperature control unit 20 has a temperature monitoring portion 201, a judging portion 202, an auxiliary electric power source 203, and a switching portion 204. Based on an output signal of the temperature sensor 106, the temperature monitoring portion 201 creates temperature information regarding the hydrogen generating member 104 and sends the information created to the judging portion 202. In a case where the temperature sensor 106 is constituted by a thermocouple, the temperature monitoring portion 201 includes an A/D convertor that converts a voltage value from the thermocouple into a digital signal. The judging portion 202 is constituted by, for example, a microcomputer and, based on the temperature information regarding the hydrogen generating member 104 sent from the temperature monitoring portion 201, performs on/off control of the switching portion 204. When the switching portion 204 is in an on state, the auxiliary electric power source 203 and the heater 105 become electrically connected to each other, and thus the heater 105 is energized. On the other hand, when the switching portion 204 is in an off state, the auxiliary electric power source 203 and the heater 105 are electrically shut off from each other, and thus the heater 105 is de-energized.

There is no particular limitation on the type of the auxiliary electric power source 203. In a case, however, where the fuel cell device 1 according to the one embodiment of the present invention has a long electric power generating life, the auxiliary electric power source 203 may be configured to be replaceable and rechargeable so that it also has a long life.

When the temperature control unit 20 starts the control operation, the switching portion 204 is brought to the on state (Step S10). After that, the judging portion 202 acquires temperature information regarding the hydrogen generating member 104 sent from the temperature monitoring portion 201 (Step S20) and judges whether or not the hydrogen generating member 104 is at a temperature not less than a predetermined temperature Tp (Step S30). The judging portion 202, therefore, is designed to include a storage section (for example, a nonvolatile memory) that stores a set value of the predetermined temperature Tp.

If it is judged that the hydrogen generating member 104 is at a temperature not less than the predetermined temperature Tp (YES at Step S30), the judging portion 202 brings the switching portion 204 to the off state (Step S40), after which the operational flow goes to Step S20.

On the other hand, if it is judged that the hydrogen generating member 104 is not at a temperature not less than the predetermined temperature Tp (NO at Step S30), the judging portion 202 brings the switching portion 204 to the on state (Step S 10), after which the operational flow goes to step S20.

The above-described control is performed, and thus when, as shown in Fig. 4, the temperature of the hydrogen generating member 104 reaches the predetermined temperature Tp, energization of the heater 105 is halted. In a case where the hydrogen generating member 104 is made of Fe, the temperature Tp is set to, for example, 100°C. This point in time is used as heater energization halting timing t1. Thereafter, an oxidation reaction (heat generation reaction) expressed by the above chemical reaction formula (2) progresses to cause the hydrogen generating member 104 to generate heat by itself, and a temperature Ta is reached at which hydrogen is generated in an amount sufficient for the fuel cell main body 10 to generate desired electric power. That is, the predetermined temperature Tp has been set so that, after the heater energization is halted at the predetermined temperature Tp, due to the self-heat generation by the hydrogen generating member 104, the temperature of the hydrogen generating member 104 reaches the temperature Ta at which hydrogen is generated in an amount sufficient for the fuel cell main body 10 to generate desired electric power. When, due to the self-heat generation, the temperature of the hydrogen generating member 104 further reaches a temperature Ts, a steady state is reached where the temperature is no longer increased.

When, for various reasons, the temperature of the hydrogen generating member 104 that has once reached the temperature Ta falls below the predetermined temperature Tp, energization of the heater 105 is restarted.

By the above-described control, energization of the heater 105 for heating the hydrogen generating member 104 to an increased temperature can be reduced to a minimum possible level, and thus the fuel cell device 1 according to the one embodiment of the present invention can achieve energy saving and provide increased electricity use efficiency.

Furthermore, in a case where electric power generation should be accelerated, for example, in a case where it is requested to obtain desired electric power as soon as possible, the predetermined temperature Tp may be set to a higher set value so that a time required for energizing the heater 105 can vary.

The following describes a modified example of this embodiment. In this embodiment, as the electrolyte membrane 101, a solid oxide electrolyte is used, so that water is generated on the fuel electrode 102 side at the time of electric power generation. According to this configuration, water is generated on a side on which the hydrogen generating member 104 is provided, which is advantageous in achieving a simplified structure and a size reduction of the device. On the other hand, it is also possible to use, as the electrolyte membrane 101, a solid polymer electrolyte that allows passage of hydrogen ions therethrough as in the fuel cell disclosed in JP-A-2009-99491. In this case, however, water is generated on the air electrode 103 side at the time of electric power generation, and, therefore, there could be provided a flow passage for conveying water thus generated to the hydrogen generating member 104.

### List of Reference Symbols

- 1: fuel cell device according to one embodiment of the present invention
- 10: fuel cell main body
- 101: electrolyte membrane
- 102: fuel electrode
- 102a: supply surface
- 103: air electrode
- 104: hydrogen generating member
- 104a: emission surface
- 105: heater
- 106: temperature sensor
- 107: cover member
- 108: air flow passage
- 109: air supply port
- 110: air discharge port
- 111: space portion
- 20: temperature control unit
- 201: temperature monitoring portion
- 202: judging portion
- 203: auxiliary electric power source
- 204: switching portion
- 30: reduction control portion
- 40: external load
- 50: external electric power source

## Claims

1. A fuel cell device, comprising:
an electric power generation portion that has a fuel electrode, an oxidant electrode, and an electrolyte held between the fuel electrode and the oxidant electrode;
a hydrogen generating member that, by an oxidation reaction with water, generates hydrogen to be supplied to the fuel electrode of the electric power generation portion;
a heating section that heats the hydrogen generating member;
a temperature detection section that detects a temperature of the hydrogen generating member; and
a temperature control section that controls the temperature of the hydrogen generating member in accordance with a result of the detection by the temperature detection section,
wherein, if the temperature control section judges that the temperature of the hydrogen generating member is not less than a predetermined temperature, the heating section is halted from operating.

2. The fuel cell device according to claim 1, wherein
the electrolyte is of such a type that water is generated on a side of the fuel electrode at a time of electric power generation, and
the hydrogen generating member generates hydrogen by using the water generated on the side of the fuel electrode.

3. The fuel cell device according to claim 2, wherein
an emission surface of the hydrogen generating member, from which hydrogen is emitted, and a supply surface of the fuel electrode, to which hydrogen is supplied, are disposed opposite to and parallel to each other.

4. The fuel cell device according to any one of claims 1 to 3, further comprising:
a cover member that incorporates therein the electric power generation portion and the hydrogen generating member.

5. The fuel cell device according to any one of claims 1 to 4, wherein the hydrogen generating member is made of iron.
